# EUROPÄISCHE PATENTANMELDUNG

(11) **EP 1 935 677 A1**
(43) Veröffentlichungstag der Anmeldung: **25.06.2008**
(21) Anmeldenummer: 07033577.3
(22) Anmeldetag: 07.12.2007
(51) Int. Cl.: B60G 11/18, B60G 17/02

(54) **Radaufhängung für ein Kraftfahrzeug**

(30) Priorität: 21.12.2006 DE 102006061985
(71) Anmelder: ThyssenKrupp Bilstein Suspension GmbH, 58256 Ennepetal (DE); ThyssenKrupp Presta München/Esslingen GmbH, 80809 München (DE)
(72) Erfinder: Preukschat, Alfred, Dipl.-Ing., 53639 Königswinter (DE); Brendecke, Thomas, Dr.-Ing., 31228 Peine (DE); Miller, Luitpold, 85521 Ottobrunn (DE); Ellmann, Siegfried, Dipl.-Ing., 85609 Aschheim (DE)
(74) Vertreter: Albrecht, Rainer Harald

(57) **Zusammenfassung**

Die Erfindung betrifft eine Radaufhängung für ein Kraftfahrzeug mit einem über Lager (2) an einem Fahrzeugaufbau (3) befestigbaren sowie um eine Längsachse drehbaren Querlenker (4) und mit einer als Drehstabfeder ausgeführten Aufbaufeder (5) zur Aufnahme von Drehbewegungen des Querlenkers (4) um die Längsachse. Die Aufbaufeder (5) ist mit einem ersten Ende (6) drehfest an dem Querlenker angeordnet. An einem zweiten Ende (7) der Aufbaufeder (5) ist ein elektromechanischer Aktuator (8) zur Drehwinkelverstellung der Aufbaufeder vorgesehen. Die Radaufhängung (1) weist ein Dämpfungselement auf. Das zweite Ende (7) der Aufbaufeder (5) ist mit einer als Drehstabfeder ausgeführten, koaxial mit der Aufbaufeder (5) angeordneten und an dem Fahrzeugaufbau (3) befestigbaren Entlastungsfeder (17) verbunden.

## Beschreibung

Die Erfindung betrifft eine Radaufhängung für ein Kraftfahrzeug mit einem über Lager an einem Fahrzeugaufbau befestigbaren sowie um eine Längsachse drehbaren Querlenker und mit einer als Drehstabfeder ausgeführten Aufbaufeder zur Aufnahme von Drehbewegungen des Querlenkers um die Längsachse, wobei die Aufbaufeder mit einem ersten Ende drehfest an dem Querlenker angeordnet ist und wobei an einem zweiten Ende der Aufbaufeder ein elektromechanischer Aktuator zur Drehwinkelverstellung der Aufbaufeder angeordnet ist. Die Radaufhängung ist insbesondere als Einzelradaufhängung an zumindest einer Achse eines Personenkraftwagens oder eines Nutzkraftwagens vorgesehen.

Aus der Druckschrift DE 39 28 062 A1 ist eine Radaufhängung für ein Kraftfahrzeug mit den eingangs beschriebenen Merkmalen bekannt, bei der die als Drehstabfedern ausgeführten Aufbaufedem durch einen elektromechanischen Aktuator tordiert werden können. Auf diese Weise lassen sich einerseits Wankbewegungen des Kraftfahrzeuges bei Kurvenfahrten ausgleichen. Andererseits ist so der Radhöhenstand unabhängig von statischen oder dynamischen Kräften, die auf Radaufhängung wirken, verstellbar.

Bei einer aus DE 38 31 338 A1 bekannten Radaufhängung ist neben der Aufbaufeder eine weitere Drehstabfeder als Entlastungsfeder vorgesehen. Sowohl die Aufbaufeder als auch die Entlastungsfeder sind rohrförmig ausgebildet und koaxial angeordnet, wobei die Entlastungsfeder die Aufbaufeder umgibt und wobei die Drehstabfedern an einem Ende über eine Koppelstelle fest verbunden sind. An dem gegenüberliegenden Ende der Drehstabfedern ist die Aufbaufeder mit dem Fahrzeugaufbau und die Entlastungsfeder mit dem Querlenker verbunden. Zwischen der Koppelstelle und dem Querlenker ist eine hydraulisch betätigbare Einrichtung zur Drehwinkelverstellung angeordnet. Die Kraftübertragung von der Koppelstelle auf den Fahrzeugaufbau erfolgt über die innerhalb der Entlastungsfeder angeordnete Aufbaufeder. Durch eine aktive Steuerung der hydraulischen Verstelleinrichtung können niederfrequente Schwingungen durch eine Veränderung der Vorspannung der Drehstabfedern an der Koppelstelle kompensiert werden. Die Entlastungsfeder bewirkt, dass die Verstelleinrichtung für vergleichsweise kleine Stellmomente ausgelegt werden kann. Das bekannte System zur aktiven Schwingungskompensation, bei dem eine hydraulische Verstelleinrichtung über Hydraulikleitungen und unter Zwischenschaltung eines steuerbaren Regel- und Stellelementes an eine Hydraulikquelle angeschlossen ist, ist technisch aufwendig. Ferner ist die Dämpfungscharakteristik der Radaufhängung insbesondere im hochfrequenten Bereich noch verbesserungsbedürftig. Um ein klar definiertes Dämpfungsverhalten niederfrequenter Schwingungen zu gewährleisten, muss die Verstelleinrichtung eine ausreichende Steifigkeit aufweisen. Mit einem hydraulischen System ist dies nur schwer zu erreichen.

Vor diesem Hintergrund liegt der Erfindung die Aufgabe zugrunde, eine Radaufhängung für ein Kraftfahrzeug mit den eingangs beschriebenen Merkmalen anzugeben, welche ein verbessertes Dämpfungsverhalten aufweist. Insbesondere soll auf einfache Weise eine exakte Verstellung der Aufbaufeder ermöglicht werden.

Ausgehend von einer Radaufhängung mit den eingangs beschriebenen Merkmalen wird die Aufgabe erfindungsgemäß dadurch gelöst, dass die Radaufhängung ein Dämpfungselement aufweist und dass das zweite Ende der Aufbaufeder mit einer als Drehstabfeder ausgeführten, koaxial mit der Aufbaufeder angeordneten und an dem Fahrzeugaufbau befestigbaren Entlastungsfeder verbunden ist. Jede dieser Federn kann dabei auch aus zwei oder mehr parallel angeordneten Einzeldrehstabfedern aufgebaut sein. Die statischen und dynamischen Kräfte, die auf die Radaufhängung wirken, werden bei dieser Ausführung gemeinsam von der Aufbaufeder, der Entlastungsfeder und dem Aktuator aufgenommen, wobei der Aktuator eine Drehwinkelverstellung der Aufbaufeder in Bezug auf den Fahrzeugaufbau ermöglicht. Die Radaufhängung mit der Entlastungsfeder und der Aufbaufeder ist dabei vorzugsweise so ausgeführt, dass die Radaufhängung bei einer vorgegebenen Belastung, die beispielsweise der mittleren zu erwartenden Krafteinwirkung bei dem Betrieb mit einem Kraftfahrzeug entspricht, allein durch die Aufbaufeder und die Entlastungsfeder in einer vorgegebenen Konstruktionslage gehalten wird, wobei der Aktuator unbelastet ist. Um ausgehend von der Konstruktionslage statische und dynamische Belastungsänderungen auszugleichen ist dann ein vergleichsweise geringes Drehmoment ausreichend. Die Federrate der Aufbaufeder ergibt sich aus den Anforderungen an die Radaufhängung. Die Federrate der Entlastungsfeder ist weitgehend frei wählbar. Das zusätzliche Dämpfungselement unterstützt bei hochfrequenten und niederfrequenten Schwingungen sowohl die Aufbaufeder als auch den elektromechanischen Aktuator, wodurch das gesamte Dämpfungsverhalten deutlich verbessert wird und typischerweise nur geringe Stellkräfte und -wege des Aktuators zur aktiven Schwingungskompensation erforderlich sind. Der elektromechanische Aktuator kann direkt von einer Steuerung und Regeleinrichtung angesteuert werden, so dass sich die Radaufhängung durch einen vergleichsweisen einfachen Aufbau auszeichnet. Da insbesondere eine Zwischenschaltung eines Hydrauliksystems mit Zuleitungen und verschiedenen Hydraulikkomponenten entfällt, kann eine schnelle und direkte Kraftübermittlung von dem Aktuator auf die Aufbaufeder gewährleistet werden. Insbesondere kann der elektromechanische Aktuator ohne weiteres Steifigkeit aufweisen, wodurch eine exakte und klar definierte Verdrehung der Aufbaufeder ermöglicht wird. Durch eine Verdrehung der Aufbaufeder mittels des elektromechanischen Aktuators kann der Radhöhenstand eines an dem Querlenker angeordneten Rades eines Kraftfahrzeuges unabhängig von den statischen Kräften aufgrund der Gewichtsbelastung der Radaufhängung und den dynamischen Kräften an der Radaufhängung beispielsweise aufgrund von Fahrbahnunebenheiten oder Fahrmanövern konstant gehalten werden. Die erfindungsgemäße Radaufhängung ermöglicht des Weiteren eine geschwindigkeitsabhängige Regulierung der Radhöhe oder abhängig von den Erfordernissen einer Erhöhung der Bodenfreiheit. Durch die Verstellmöglichkeiten mittels des elektromechanischen Aktuators können auch Fertigungstoleranzen der Aufbaufeder und optional vorgesehen weiteren Federelementen ausgeglichen werden.

Im Rahmen der Erfindung liegt es, dass die Radaufhängung lediglich die Aufbaufeder und optional weitere Drehstabfedern aufweist. Eine solche Ausgestaltung zeichnet sich durch einen geringen Platzbedarf aus, wobei insbesondere der Bauraum im Bereich eines Radkastens minimiert werden kann, da dort die Anordnung eines herkömmlichen Federbeins entfällt. Insbesondere kann im Vergleich zu einer herkömmlichen Ausgestaltung, bei der Federbeine vorgesehen sind, durch den Wegfall von Federbeindomen die zur Verfügung stehende Breite eines über einer Fahrzeugachse angeordneten Kofferraums oder Motorraums vergrößert werden.

Im Rahmen einer alternativen Ausgestaltung der Erfindung kann die Radaufhängung zusätzlich zu der Aufbaufeder auch herkömmliche Federelemente wie Schrauben- oder Luftfedern, vorzugsweise in Kombination mit einem Kolbendämpfer, aufweisen. Im Rahmen einer solchen Ausgestaltung ist vorzugsweise vorgesehen, dass das statische Fahrzeuggewicht, zumindest zu einem großen Anteil, von den herkömmlichen Federelementen aufgenommen wird. Die erfindungsgemäße Aufbaufeder, deren Vorspannung mit dem elektromechanischen Aktuator verstellt werden kann, ermöglicht dann die aktive Steuerung der Federcharakteristik, ohne dass im Bereich der Radaufhängung und insbesondere im Bereich eines Federbeindoms ein zusätzlicher Bauraum benötigt wird. Die erfindungsgemäße Lehre kann mit bekannten Ausgestaltungen von Einzelradaufhängungen kombiniert werden.

Zur Verstellung der Vorspannung der Aufbaufeder sind typischerweise kurze Stellwege und große Drehmomente erforderlich, weshalb der elektromechanische Aktuator in einer bevorzugten Ausgestaltung der Erfindung einen Stellmotor und ein auf die Aufbaufeder wirkendes Untersetzungsgetriebe aufweist. Zur optimalen Raumnutzung können der Stellmotor und/oder das Untersetzungsgetriebe konzentrisch um die Aufbaufeder herum angeordnet sein. In diesem Fall kann der Stellmotor als elektrischer Ringmotor und/oder das Untersetzungsgetriebe als Planetenradgetriebe oder Harmonic Drive ausgebildet sein. Zweckmäßig ist der Aktuator ferner mit einer Feststellvorrichtung ausgestattet, die vorzugsweise elektrisch oder elektromechanisch betätigbar ist.

In einer bevorzugten Weiterbildung der beschriebenen Ausgestaltung ist die Aufbaufeder rohrförmig ausgebildet und konzentrisch um die Entlastungsfeder, die selbst auch rohrförmig ausgebildet sein kann, angeordnet. Durch eine solche konzentrische Ausgestaltung können die Aufbaufeder und die Entlastungsfeder besonders kompakt angeordnet werden.

Im Rahmen einer besonders bevorzugten Ausführung der Erfindung ist vorgesehen, dass das zweite Ende der Aufbaufeder und ein zugeordnetes Ende der Entlastungsfeder über ein Einstellelement gekoppelt sind, wobei das Einstellelement ein Verdrehen der einander zugeordneten Enden gegeneinander zur Justage ermöglicht. Die Verbindung über das Einstellelement erlaubt beispielsweise einen Ausgleich von Fertigungstoleranzen der Drehstabfedern. Ferner ermöglicht die Justage zwischen der Entlastungsfeder und der Aufbaufeder eine Anpassung an unterschiedliche Belastungen und eine Verschiebung der Konstruktionslage, so dass die Radaufhängung beispielsweise an unterschiedliche Leergewichte von unterschiedlichen Fahrzeugtypen angepasst werden kann.

Die Justage kann auch mit Hilfe des mit einer Feststellvorrichtung erweiterten Aktuators vorgenommen werden. Um den Justagewert auch im abgeschalteten Zustand des Aktuators beibehalten zu können ist speziell im Bereich des Elektromotors eine elektromagnetische oder mechanische Bremse oder Feststellvorrichtung vorgesehen.

Die Aufbaufeder und/oder die Entlastungsfeder können auch aus zwei oder mehr parallel angeordneten Drehstabfedern zusammengesetzt sein.

Vorzugsweise ist das erfindungsgemäße Dämpfungselement als passiver Rotationsdämpfer ausgebildet, der am Querlenker oder auf der Aufbaufeder angeordnet ist. Der Querlenker bzw. die Aufbaufeder sind über den passiven Rotationsdämpfer, der beispielsweise aus einem elastomeren Material gebildet sein kann, mit dem Fahrzeugaufbau verbunden. Alternativ kann das Dämpfungselement jedoch auch als Kolbendämpfer, vorzugsweise als aktiv steuerbarer Kolbendämpfer ausgeführt sein, der zweckmäßigerweise zwischen dem Querlenker und dem Fahrzeugaufbau angeordnet ist. Bei dem Einsatz eines aktiv steuerbaren Kolbendämpfers können besonders vorteilhaft sowohl die Federeigenschaften mittels des elektromechanischen Aktuators und die Dämpfungseigenschaften durch den aktiv steuerbaren Kolbendämpfer unabhängig voneinander verändert werden. Im Rahmen der Erfindung können auch grundsätzlich Kombinationen verschiedener passiver und/oder aktiver Dämpfungselemente eingesetzt werden.

Die Erfindung wird im Folgenden anhand von Ausführungsbeispielen erläutert. Es zeigen schematisch:
- **Fig. 1a**: eine Radaufhängung für ein Kraftfahrzeug mit einer als Drehstabfeder ausgebildeten Aufbaufeder,
- **Fig. 1b**: die Radaufhängung gemäß der Fig. 1a in einer Ansicht von vorne,
- **Fig. 2a**: eine erfindungsgemäße Radaufhängung in einer Draufsicht,
- **Fig. 2b**: die Ausgestaltung gemäß Fig. 2a in einer Ansicht von vorne,
- **Fig. 3a**: eine weitere Ausgestaltung der erfindungsgemäßen Radaufhängung in einer Draufsicht und
- **Fig. 3b**: die Radaufhängung gemäß Fig. 3a in einer Ansicht von vorne.

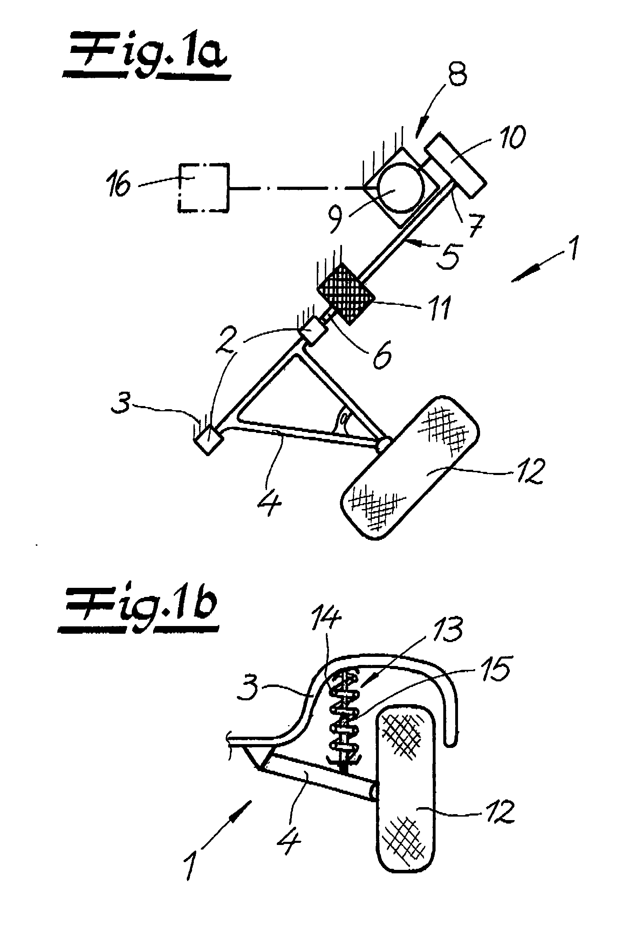

Fig. 1a zeigt den grundsätzlichen Aufbau einer Radaufhängung 1 für ein Kraftfahrzeug mit einem über Lager 2 an einem Fahrzeugaufbau 3 befestigbaren sowie um eine Längsachse drehbaren Querlenker 4, und mit einer als rohrförmige Drehstabfeder ausgeführten Aufbaufeder 5 zur Aufnahme von Drehbewegungen des Querlenkers 4 um die Längsachse. Die Aufbaufeder ist mit einem ersten Ende 6 drehfest an dem Querlenker 4 angeordnet. An einem zweiten Ende 7 der Aufbaufeder 5 ist ein Aktuator 8 bestehend aus einem Stellmotor 9 und einem auf die Aufbaufeder 5 wirkenden Untersetzungsgetriebe 10 zur Drehwinkelverstellung der Aufbaufeder 5 angeordnet. Nahe des Querlenkers 4 ist ein passiver Rotationsdämpfer 11 als Dämpfungselement vorgesehen, welches die Aufbaufeder 5 mit dem Fahrzeugaufbau 3 verbindet. An dem Querlenker 4 ist ein Fahrzeugrad 12 angeordnet.

Fig. 1b zeigt die Anordnung gemäß Fig. 1a in einer Ansicht von vorne. Die dargestellte Radaufhängung 1 weist zusätzlich zu dem Rotationsdämpfer 11 und der Aufbaufeder 5 ein Federbein 13 mit einer Schraubenfeder 14 und einem aktiv steuerbaren Kolbendämpfer 15 auf. Während die statische Last des Kraftfahrzeuges hauptsächlich von der Schraubenfeder 14 aufgenommen ist, kann durch eine Drehwinkelverstellung der Aufbaufeder 5 mit dem Aktuator 8 der Radhöhenstand verändert werden. Zur Ansteuerung des Stellmotors 9 ist ein elektronisches Steuergerät 16 vorgesehen, welches beispielsweise sensorisch erfasste Zustandsdaten, benutzerdefinierte Daten und/oder Vorgabewerte verarbeiten kann. Neben einer Höhenverstellung kann durch eine aktive Drehwinkelverstellung die Vorspannung der Aufbaufeder 5 abhängig von den vom Steuergerät 16 erfassten und verarbeiteten Daten zum Ausgleich von Nick-, Wank- und Gierbewegungen verändert werden. Bei der dargestellten aktiven Radaufhängung 1 kann die Federkraft einerseits statisch oder dynamisch durch Verdrehen der Aufbaufeder 5 abhängig und andererseits durch den aktiv steuerbaren Kolbendämpfer 15 dynamisch verändert werden.

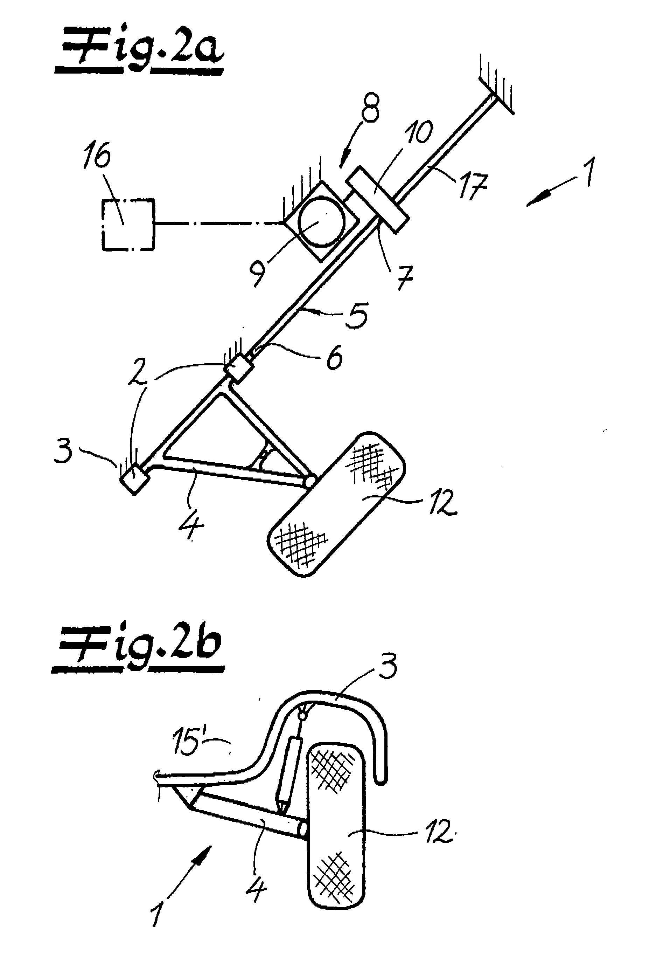

Fig. 2a zeigt eine erfindungsgemäße Ausgestaltung der Radaufhängung 1, wobei das zweite Ende 7 der Aufbaufeder 5, an dem der elektromechanische Aktuator 8 angeordnet ist, mit einer als Drehstabfeder ausgeführten, koaxial mit der Aufbaufeder 5 angeordneten und an dem Fahrzeugaufbau 3 befestigten Entlastungsfeder 17 verbunden ist. Der Stellmotor 9 des Aktuators 8 ist wie auch bei der Ausführung gemäß Fig. 1a an dem Fahrzeugaufbau 3 befestigt, wobei jedoch die an dem zweiten Ende 7 der Aufbaufeder 5 wirkenden Drehmomente größtenteils von der Entlastungsfeder 17 aufgenommen werden. Ausgehend von einer Konstruktionslage, bei der der Aktuator 8 bei einer mittleren Krafteinwirkung auf die Radaufhängung 1 weitgehend unbelastet ist, kann der Drehwinkel an der Verbindung von Aufbaufeder 5 und Entlastungsfeder 17 zur Radhöhenverstellung und zum Ausgleich dynamischer Kräfte mit einem vergleichsweise geringen Drehmoment verstellt werden. Der Fig. 2b ist zu entnehmen, dass die Radaufhängung 1 als Dämpfungselement lediglich einen passiven oder aktiv steuerbaren Kolbendämpfer 15' aufweist, der mit einem Ende an dem Querlenker 4 und mit dem anderen Ende an dem Fahrzeugaufbau 3 befestigt ist.

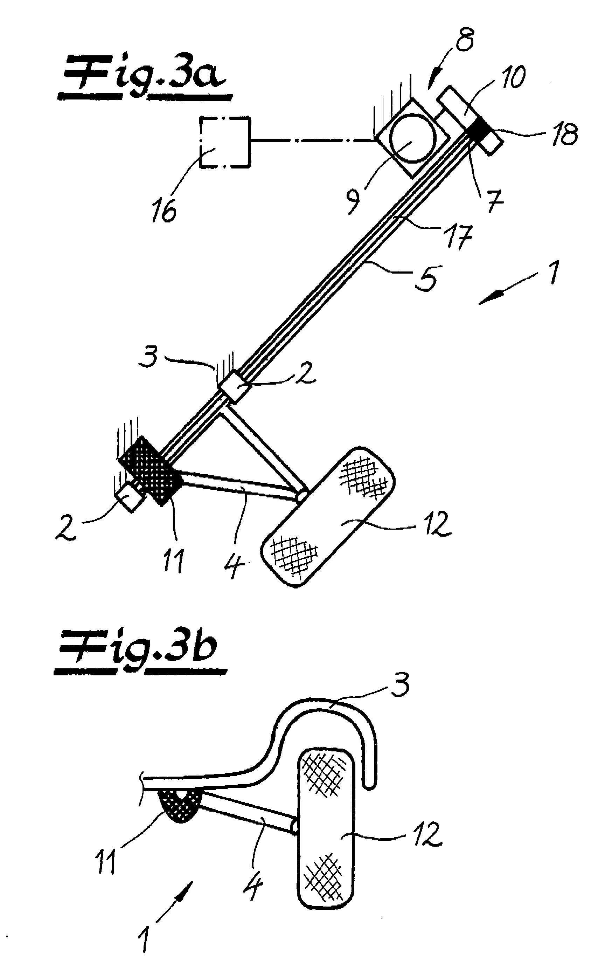

Fig. 3a zeigt eine besonders kompakte und platzsparende Ausgestaltung der erfindungsgemäßen Radaufhängung 1. Wie bei der Ausführung gemäß Fig. 2a ist eine Entlastungsfeder 17 vorgesehen, die mit dem zweiten Ende 7 der Aufbaufeder 5 verbunden ist, wobei die Aufbaufeder 5 rohrförmig ausgebildet ist und die Entlastungsfeder 17 konzentrisch umgibt. Das zweite Ende 7 der Aufbaufeder 5 und ein zugeordnetes Ende der Entlastungsfeder 17 sind über ein Einstellelement 18 gekoppelt, wobei das Einstellelement 18 ein Verdrehen der einander zugeordneten Enden gegeneinander zur Justage ermöglicht. Durch die Justage kann die Radaufhängung 1 an verschiedene Lasten angepasst werden, wobei auch Fertigungstoleranzen der Drehstabfedern ausgeglichen und die Radhöhe bei einer vorgegebenen Konstruktionslage verändert werden können. Als einziges Dämpfungselement ist ein passiver Rotationsdämpfer 11 vorgesehen, der an dem Querlenker 4 und an dem Fahrzeugaufbau 3 befestigt ist. Wie Fig. 3b zu entnehmen ist, ist der Platzbedarf der Radaufhängung 1 im Vergleich zu einem herkömmlichen Federbein äußerst gering. Insbesondere kann in einem Innenraum des Fahrzeuges die zwischen den Fahrzeugrädern 12 zur Verfügung stehende Breite deutlich erhöht werden. Die erfindungsgemäße aktive Radaufhängung kann ohne Einschränkung an zumindest einer Achse oder auch an zwei Achsen eines Personenkraftwagens oder eines Nutzkraftwagens vorgesehen sein.

## Patentansprüche

1. Radaufhängung für ein Kraftfahrzeug mit einem über Lager (2) an einem Fahrzeugaufbau (3) befestigbaren sowie um eine Längsachse drehbaren Querlenker (4) und mit einer als Drehstabfeder ausgeführten Aufbaufeder (5) zur Aufnahme von Drehbewegungen des Querlenkers (4) um die Längsachse, wobei die Aufbaufeder (5) mit einem ersten Ende (6) drehfest an dem Querlenker angeordnet ist und wobei an einem zweiten Ende (7) der Aufbaufeder (5) ein elektromechanischer Aktuator (8) zur Drehwinkelverstellung der Aufbaufeder (5) angeordnet ist, **dadurch gekennzeichnet, dass** die Radaufhängung (1) ein Dämpfungselement aufweist und dass das zweite Ende (7) der Aufbaufeder (5) mit einer als Drehstabfeder ausgeführten, koaxial mit der Aufbaufeder (5) angeordneten und an dem Fahrzeugaufbau (3) befestigbaren Entlastungsfeder (17) verbunden ist.

2. Radaufhängung nach Anspruch 1, **dadurch gekennzeichnet, dass** der Aktuator (8) einen Stellmotor (9) und ein auf die Aufbaufeder (5) wirkendes Untersetzungsgetriebe (10) aufweist.

3. Radaufhängung nach Anspruch 2, **dadurch gekennzeichnet, dass** der Aktuator (8) mit einer Feststellvorrichtung ausgestattet ist.

4. Radaufhängung nach Anspruch 3, **dadurch gekennzeichnet, dass** die Feststellvorrichtung elektrisch oder elektromechanisch betätigbar ist.

5. Radaufhängung nach einem der Ansprüche 1 bis 4, **dadurch gekennzeichnet, dass** die Aufbaufeder (5) rohrförmig ausgebildet ist und die Entlastungsfeder (17) konzentrisch umgibt.

6. Radaufhängung nach einem der Ansprüche 1 bis 5, **dadurch gekennzeichnet, dass** das zweite Ende (7) der Aufbaufeder (5) und ein zugeordnetes Ende der Entlastungsfeder (17) über ein Einstellelement (18) gekoppelt sind, wobei das Einstellelement (18) ein Verdrehen der einander zugeordneten Enden gegeneinander zur Justage ermöglicht.

7. Radaufhängung nach einem der Ansprüche 1 bis 6, **dadurch gekennzeichnet, dass** die Aufbaufeder (5) und/oder die Entlastungsfeder (17) aus zwei oder mehr parallel angeordneten Drehstabfedern zusammengesetzt sind.

8. Radaufhängung nach einem der Ansprüche 1 bis 7, **dadurch gekennzeichnet, dass** das Dämpfungselement als passiver Rotationsdämpfer (11) ausgebildet ist, der am Querlenker (4) oder auf der Aufbaufeder (5) angeordnet ist.

9. Radaufhängung nach einem der Ansprüche 1 bis 7, **dadurch gekennzeichnet, dass** das Dämpfungselement als aktiv steuerbarer Kolbendämpfer (15) ausgebildet ist, der an dem Querlenker (4) befestigt ist.

10. Radaufhängung nach einem der Ansprüche 1 bis 9, **dadurch gekennzeichnet, dass** die Radaufhängung (1) ein Federbein (13) mit einer Schraubenfeder (14) aufweist.
